# EUROPÄISCHE PATENTANMELDUNG

(11) **EP 2 631 084 A2**
(43) Veröffentlichungstag der Anmeldung: **28.08.2013**
(21) Anmeldenummer: 13000276.9
(22) Anmeldetag: 19.01.2013
(51) Int. Cl.: B42C 19/08, B65H 29/40, B65G 47/24

(54) **Vorrichtung zum Zuführen von Buchblocks in den Einfuhrkanal einer Weiterverarbeitungseinrichtung**

(30) Priorität: 21.02.2012 DE 102012003602
(71) Anmelder: Kolbus GmbH & Co. KG, 32369 Rahden (DE)
(72) Erfinder: Tas, Yahya, D-32351 Stemwede (DE); Régent, Nicolas, D-67808 Steinbach am Donnersberg (DE)

(57) **Zusammenfassung**

Bei einer Vorrichtung zum Zuführen von Buchblocks (2) in den Einfuhrkanal (11) einer Weiterverarbeitungseinrichtung, mit einem intermittierend rotierenden Anlegestern (31) mit mehreren, sternförmig an einer in Scheiben (33) unterteilten Walze angeordneten, jeweils rechtwinklig zueinander stehende erste und zweite Anlegeflächen (34.1, 34.2) aufweisenden Blockaufnahmen (34), ist vorgesehen, dass der Anlegestern (31) mehrere, jeweils den Blockaufnahmen (34) zugeordnete, parallel zu den zweiten Anlegeflächen (34.2) angeordnete sowie zu diesen relativ bewegbare Klemmbacken (36) aufweist. Der Anlegestern (31) kann mit wesentlich höherer Drehbeschleunigung und -geschwindigkeit betrieben werden, ohne dass die Buchblocks (2) die Anlage in den Blockaufnahmen (34) verlieren. Es lassen sich auch lose zusammengetragene Buchblocks (2) einwandfrei verarbeiten.

## Beschreibung

Die vorliegende Erfindung betrifft eine Vorrichtung zum Zuführen von Buchblocks in den Einfuhrkanal einer Weiterverarbeitungseinrichtung gemäß dem Oberbegriff des Anspruchs 1.

Eine gattungsgemäße Zuführeinrichtung ist aus der DE 71 25 313 U bekannt. Flachliegend zugeführte Buchblocks werden von einem umlaufenden Förderorgan aufgerichtet und zwar so, dass sie auf ihrem Vorderschnitt stehen, um dann im Einfuhrkanal einer Buchfertigungsstraße von Transporteuren weitertransportiert zu werden. Das auch als Anlegestern bezeichnete, intermittierend rotierende Förderorgan ist eine in Scheiben unterteilte Walze, die mehrere, sternförmig angeordnete, jeweils rechtwinklig zueinander stehende erste und zweite Anlegeflächen aufweisende Ausschnitte als Blockaufnahmen aufweist. Die Buchblocks werden dem Anlegestern im Wesentlichen tangential zur Walze und quer zur Drehachse flachliegend zugeführt und nach dem Aufstellen parallel zur Drehachse abgefördert. In der DE 71 25 313 U ist ein Anlegestern in Sechser-Teilung dargestellt, bei dem die Buchblocks von einem 30° geneigten Riemenförderer in den jeweiligen Ausschnitt unter Anlage an der ersten Anlegefläche eingefördert werden. Mit einsetzender Rotation des Anlegesterns werden die Buchblocks durch die zweite Anlegefläche vom Riemenförderer abgehoben und sodann aufgerichtet. Für höhere Taktleistungen sind Anlegesterne mit Achter-Teilung entwickelt worden, welche die Buchblocks aus einer horizontalen Lage mit einem 45° geneigten Zwischenhalt aufrichten.

Insbesondere bei der Verarbeitung von aus mehreren Signaturen und/oder Blättern lose zusammengetragenen Buchblocks besteht die Gefahr, dass die Buchblocks durch die beim rotativen Aufrichten wirkenden Flieh- und Beschleunigungskräfte auseinanderrutschen und dabei ihre Ordnung und Ausrichtung verlieren. Auch ist die Taktleistung begrenzt durch den Umstand, dass die Buchblocks bei einer zu großen Bremsbeschleunigung im 45° geneigten Zwischenhalt von den Anlegeflächen abheben und sich dabei überschlagen können.

Es ist eine Aufgabe der vorliegenden Erfindung, die gattungsgemäße Zuführeinrichtung derart weiterzubilden, dass bei hoher Verarbeitungsgeschwindigkeit eine schonende Behandlung von insbesondere lose zusammengetragenen Buchblocks gewährleistet ist.

Diese Aufgabe wird gelöst durch eine Vorrichtung nach Anspruch 1. Die abhängigen Ansprüche definieren bevorzugte Ausführungsformen der erfindungsgemäßen Vorrichtung.

Erfindungsgemäß ist vorgesehen, dass der Anlegestern mehrere, jeweils den Blockaufnahmen zugeordnete, parallel zu den zweiten Anlegeflächen angeordnete sowie zu diesen relativ bewegbare Klemmbacken aufweist. Die Buchblocks werden von den Klemmbacken jeweils gegen die zweite Anlegefläche der Blockaufnahmen gedrückt und dadurch während des Aufrichtens in den Blockaufnahmen fixiert. Der Anlegestern kann mit wesentlich höherer Drehbeschleunigung und -geschwindigkeit betrieben werden, ohne dass die Buchblocks die Anlage an den ersten und zweiten Anlegeflächen verlieren oder sich gar überschlagen. Insbesondere wird die Verarbeitung von lose zusammengetragenen Buchblocks ermöglicht, die sich nun auch bei hoher Verarbeitungsgeschwindigkeit aufrichten lassen, ohne dass sich die einzelnen Signaturen und/oder Blätter zueinander verschieben.

Es können Buchblocks unterschiedlicher Blockdicke verarbeitet werden, wenn die Klemmbacken federbelastet gegen die zweiten Anlegeflächen drücken. Eine Blockdickeneinstellung ist nicht erforderlich.

Vorzugsweise erfolgt das Schließen und Öffnen der Klemmbacken über eine Steuerkurve. Die Öffne- und Schließbewegung wird einfach dadurch erzeugt, dass an den Klemmbacken bzw. ihren Führungsgliedern angeordnete Laufrollen während der Rotation des Anlegesterns an der Steuerkurve ablaufen. Antriebsmittel für jede einzelne Klemmbacke sind nicht erforderlich. Um zumindest die Klemmbacken im Stillstand des Anlegesterns schließen zu können, kann die Steuerkurve von einem Antriebsmittel, z.B. einem Pneumatikzylinder, um die Drehachse des Anlegestern taktweise vor und zurück gedreht werden, sodass die jeweils im Zuführbereich des Anlegesterns zu schließende Klemmbacke von dem entsprechenden Kurvenabschnitt der Steuerkurve aktiviert wird, bevor der Anlegestern wieder zu rotieren beginnt. Wenn die Klemmbacken noch während der Rotationsbewegung des Anlegestern, unmittelbar bevor die Buchblocks ihre finale Aufrichtposition erreichen, geöffnet werden, können die Buchblocks umgehend vom Anlegestern abgeschoben werden. Die Abschiebebewegung kann mit dem Ende der Rotationsbewegung des Anlegesterns überlagert sein, wodurch eine weitere Taktleistungserhöhung erreicht wird.

In einfacher Weise kann mit einer integrierten Blockdickenmesseinrichtung die jeweilige Blockdicke der vom Anlegestern aufgerichteten Buchblocks ermittelt werden, indem die tatsächliche Position der jeweils in Schließstellung gesteuerten Klemmbacken in einer bestimmten Drehstellung des Anlegesterns erfasst wird. Auch kann dadurch eine Nichtbelegung einer Blockaufnahme erfasst werden. Die gemessene Blockdicke kann für blockdickenabhängige Einstellungen der Weiterverarbeitungseinrichtung herangezogen werden und/oder es erfolgt eine Dickenkontrolle zur Vollständigkeitsprüfung mit der Möglichkeit zur gezielten Ausschleusung von der weiteren Verarbeitung.

In weiterer Ausgestaltung ist vorgesehen, dass dem Anlegestern wenigstens ein separat vom wenigstens einen Mitnehmer des Einfuhrkanals angetriebener Ausschieber zugeordnet ist. Der Anlegestern mit dem wenigstens einen separat angetriebenen Ausschieber kann im Bedarfsfall von dem Einfuhrkanal der Weiterverarbeitungseinrichtung entkoppelt werden, wobei ein bereits im Einfuhrkanal aufgestellter Buchblock nicht sogleich sondern gezielt an einen jeweiligen Mitnehmer des Einfuhrkanals übergeben wird. Außerdem kann eine Abschiebebewegung definiert werden, die ein sanftes Anfahren des Ausschiebers gegen den abzuschiebennden Buchblock einerseits und eine synchrone Übergabe an den kontinuierlich laufenden Mitnehmer des Einfuhrkanals andererseits ermöglicht. Die Abschiebebewegung kann diesbezüglich nach der Formathöhe der Buchblocks veränderbar sein. Vorzugsweise ist der wenigstens eine Ausschieber zum wahlweisen Abschieben der Buchblocks vom Anlegestern in entgegengesetzte Förderrichtungen ausgebildet, sodass bspw. als fehlerhaft erkannte Buchblocks in eine dem Einfuhrkanal gegenüberliegende Querstapelauslage ausgeschleust werden können.

Der Buchblockanleger mit dem separat angetriebenen Ausschieber kann entlang des Einfuhrkanals der Weiterverarbeitungseinrichtung angeordnet werden, wenn der wenigstens eine Ausschieber zur Übernahme und zur Weiterleitung in den Einfuhrkanal von in Förderrichtung des Einfuhrkanals zugeführten Buchblocks ausgebildet ist. Durch eine im Bereich des Anlegesterns im Einfuhrkanal angeordnete Trennwand können in Förderrichtung des Einfuhrkanals und über den Anlegestern zugeführte Teilbuchblocks zusammengeführt und als vollständiger Buchblock der Weiterverarbeitungseinrichtung zugeführt werden. In einer Weiterausgestaltung ist vorgesehen, dass an dem Einfuhrkanal wenigstens zwei Anlegesterne angeordnet sind.

Im Folgenden werden anhand der Zeichnung Ausführungsbeispiele der erfindungsgemäßen Vorrichtung beschreiben. Es zeigen rein schematisch
- **Fig. 1**: eine Seitenansicht von einem Anlegestern als Buchblockanleger;
- **Fig. 2**: eine Draufsicht des Anlegesterns;
- **Fig. 3**: eine vereinfachte Draufsicht des Anlegesterns mit einer Querstapelauslage;
- **Fig. 4**: eine Draufsicht von einer Anordnung mit zwei Anlegesternen.

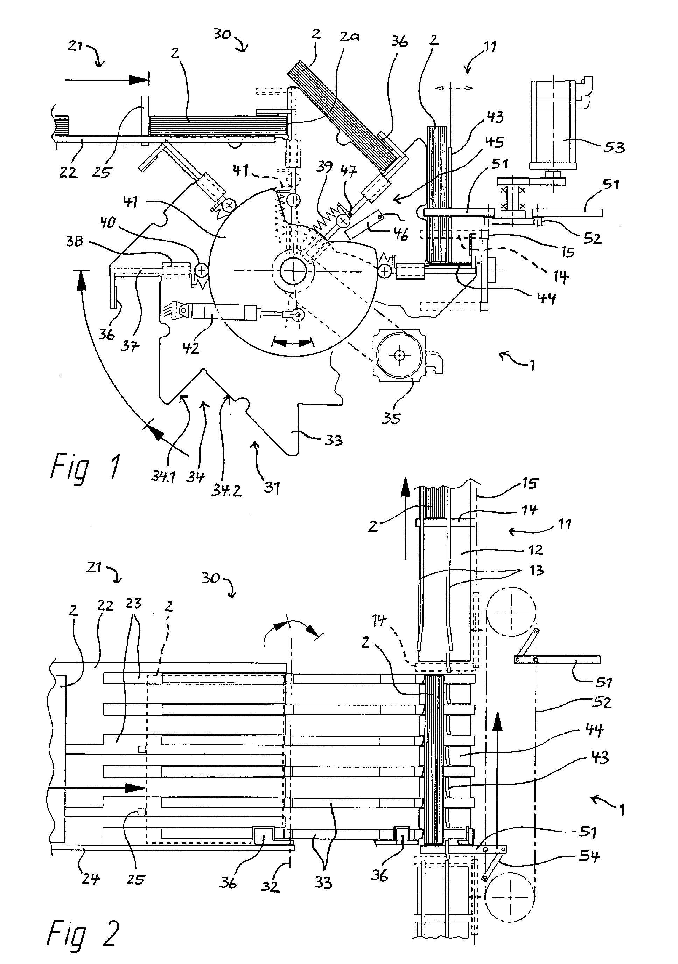

Die in den Figuren 1 und 2 gezeigte Zuführeinrichtung 1 dient der Zuführung von Buchblocks 2 zu einem Klebebinder als Weiterverarbeitungseinrichtung, wobei in den Figuren lediglich ein Ausschnitt eines Einfuhrkanals 11 des Klebebinders dargestellt ist. Die Buchblocks 2 werden im aus Kanalboden 12 und seitlichen Kanalführungen 13 gebildeten Einfuhrkanal 11 von in einem gleichen gegenseitigen Abstand zueinander an einer kontinuierlich umlaufenden Förderkette 15 angeordneten Mitnehmern 14 zu den Transportklammern des Klebebinders gefördert. Die Förderkette 15 ist antriebsmäßig mit dem Klebebinder gekoppelt. Die Zuführeinrichtung 1 kann auch an einer Buchfertigungsstraße oder einer anderen Weiterverarbeitungseinrichtung für Buchblocks angeordnet sein.

Die Zuführeinrichtung 1 weist einen Anlegestern 31 als Buchblockanleger 30 auf. Flachliegend von einem Zuführförderer 21 zugeführte Buchblocks 2 werden vom Anlegestern 31 übernommen und in einer zweistufigen Rotationsbewegung auf ihren Rücken 2 a gestellt und schließlich in den Einfuhrkanal 11 abgeschoben. Der im Ausführungsbeispiel gezeigte Zuführförderer 21 weist intermittierend vorschiebende Mitnehmer 25 auf, welche die Buchblocks 2 auf einem Gleitblech 22 unter Anlage an einer seitlichen Führung 24 zum Anlegestern 31 vorschieben. Die Buchblocks 2 können von Hand auf dem Zuführförderer 21 abgelegt werden oder über ein Förderband zum Zuführförderer 21 gelangen. Der Zuführförderer 21 kann auch als Riemenförderer ausgebildet sein.

Der von einem Servomotor 35 intermittierend rotierend angetriebene Anlegestern 31 ist eine in Scheiben 33 unterteilte Walze mit einer parallel zur Kanalrichtung orientierten Rotationsachse 32 und mit mehreren sternförmig angeordneten, jeweils rechtwinklig zueinander stehenden ersten und zweiten Anlegeflächen 34.1 und 34.2 aufweisenden Ausschnitten als Blockaufnahmen 34. Die einzelnen Scheiben 33 greifen durch Öffnungen 23 des Gleitblechs 22 und heben mit einsetzender Rotation des Anlegesterns 31 die Buchblocks 2 vom Zuführförderer 21 ab.

Erfindungsgemäß weist der Anlegestern 31 mehrere, jeweils den Blockaufnahmen 34 zugeordnete, parallel zu den zweiten Anlegeflächen 34.2 angeordnete sowie zu diesen relativ bewegbare Klemmbacken 36 auf. Die Buchblocks 2 werden von den Klemmbacken 36 jeweils gegen die zweite Anlegefläche 34.2 gedrückt und dadurch während des Aufrichtens verschiebungs- und kippsicher in den Blockaufnahmen 34 fixiert.

Die Klemmbacken 36 befinden sich endseitig an einer in Linearführungen 38 geführten und von einer Zugfeder 39 in Klemmrichtung kraftbeaufschlagten Stange 37. Das Öffnen und Schließen der Klemmbacken 36 erfolgt über eine Steuerkurve 41, auf der an den Stangen 37 befindliche Kurvenrollen 40 während der Rotation des Anlegesterns 31 ablaufen. Die Klemmbacken 36 werden von der Steuerkurve 41 in eine maximal geöffnete Offenstellung aufgedrückt und zum Klemmen der Buchblocks 2 einfach freigegeben.

Um den jeweiligen Buchblock 2 noch vor einsetzender Rotation des Anlegesterns 31 in der betreffenden Blockaufnahme 34 zu fixieren, wird die Steuerkurve 41 im Stillstand des Anlegesterns 31 von einem taktgemäß angesteuerten Pneumatikzylinder 42 aus der in Fig. 1 gestrichelt gezeichneten Lage um einen bestimmten Winkelbereich in die durchgezogen gezeichnete Lage zur Freigabe der Kurvenrolle 40 und damit der Klemmbacke 36 vorgedreht und während der Rotation des Anlegesterns 31 wieder in die Ausgangslage zurückgedreht.

Die Steuerkurve 41 ist derart ausgebildet, dass die Klemmbacken 36 unmittelbar vor Erreichen der Aufrichtposition geöffnet werden. In der Aufrichtposition werden die Buchblocks 2 auf einen Kanalboden 44 abgestellt, unter seitlicher Abstützung durch die zweite Anlegefläche 34.2 einerseits und durch auf Blockdicke einstellbare.Führungsbleche 43 andererseits. Mittels eines separat angetriebenen Ausschiebers 51 wird der jeweils aufgerichtete Buchblock 2 in Richtung Einfuhrkanal 11 abgeschoben und quasi im Gleichlauf an die Mitnehmer 14 übergeben.

Im Ausführungsbeispiel sind zwei an einer umlaufenden Förderkette 52 angeordnete Ausschieber 51 vorgesehen, die abwechselnd das Abschieben der Buchblocks 2 übernehmen. Die Ausschieber 51 sind jeweils über eine zusätzlich an der Förderkette 52 angelenkte Koppel 54 derart geführt, dass sie nach der Übergabe der Buchblocks 2 an den Mitnehmer 14 des Einfuhrkanals 11 stets quer zur Förderrichtung orientiert aus dem Einfuhrkanal 11 zurück gezogen werden.

Der Antrieb der Förderkette 52 erfolgt mit einem separaten Servomotor 53, womit ein sanftes Anfahren der Ausschieber 51 gegen den jeweils abzuschiebenden Buchblock 2 einerseits und eine synchrone Übergabe an die kontinuierlich laufenden Mitnehmer 14 des Einfuhrkanals 11 andererseits ermöglicht wird. Die Abschiebebewegung kann nach der Zuführposition und/oder der Formathöhe der Buchblocks 2 veränderbar sein. Der separate Antrieb der Ausschieber 51 kann auch dafür genutzt werden, die Übergabe an den Einfuhrkanal 11 auszusetzen bzw. die Buchblocks 2 bestimmten Mitnehmern 14 und damit bestimmten Transportklammern des Klebebinders zuzuführen.

In der Draufsicht von Fig. 2 ist der Anlegestern 31 im Einfuhrkanal 11 integriert. An einer weiter hinten liegenden Stelle des Einfuhrkanals 11 zugeführte Buchblocks 2 können an dem Anlegestern 31 vorbeigeführt werden, indem die Buchblocks 2 von den Ausschiebern 51 aus dem zuführenden Kanalabschnitt übernommen und in den weiterführenden Kanalabschnitt überführt werden.

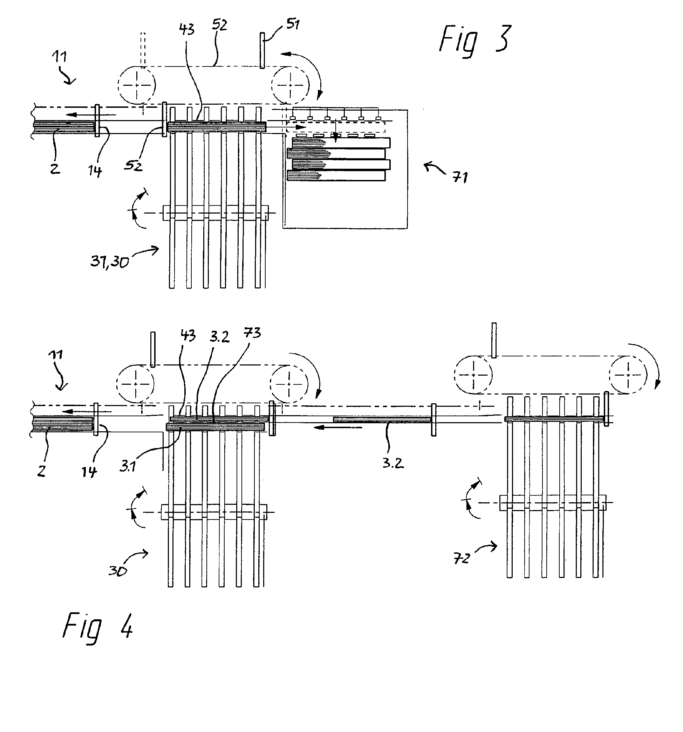

Fig. 3 zeigt eine dem Einfuhrkanal 11 zur Weiterverarbeitungseinrichtung gegenüberliegende Querstapelauslage 71. Die vom Anlegestern 31 aufgerichteten und in den Einfuhrkanal 11 abgestellten Buchblocks 2 werden wahlweise in zum Einfuhrkanal 11 entgegen gesetzte Richtung abgeschoben und der Querstapelauslage 71 zur versetzten Stapelbildung zugeführt, beispielsweise um fehlerhaft erkannte Buchblocks 2 von der Weiterverarbeitung auszuschließen und in einem späteren Zeitpunkt erneut über den Anlegestern 31 der Weiterverarbeitungseinrichtung zuzuführen. Die Ausschieber 51 sind zum Fördern in beide Richtungen ausgebildet. Statt der Querstapelauslage 71 kann eine zweite, alternative Weiterverarbeitungsrichtung an dem Buchblockanleger 30 angeschlossen sein.

Fig. 4 zeigt die Anordnung eines zweiten Buchblockanlegers 72. Hierüber angelegte zweite Teilblocks 3.2 werden mit über den ersten Buchblockanleger 30 angelegten ersten Teilblocks 3.1 zu vollständigen Buchblocks 2 zusammengeführt und dem Einfuhrkanal 11 übergeben. Im Bereich des ersten Buchblockanlegers 30 ist hierzu eine Zwischenwand 73 vorgesehen, um den zweiten Teilblock 3.2 neben den ersten Teilblock 3.1 zu schieben. Die zwei Buchblockanleger 30, 72 können auch zur wahlweisen Zuführung von Buchblocks 2 eingesetzt werden.

Aus Fig. 1 ist noch eine im Anlegestern 31 integrierte Blockdickenmesseinrichtung 45 ersichtlich. Mittels eines ortsfesten Magnetbandlesers 46 und auf den Stangen 37 angebrachte Magnete 47 wird während der Rotation des Anlegesterns 31 die jeweilige Klemmstellung der in Schließstellung gesteuerten Klemmbacken 36 erfasst und einer Auswertung zugeführt. Die gemessene Blockdicke kann für blockdickenabhängige Einstellungen der Weiterverarbeitungseinrichtung herangezogen werden und/oder es erfolgt eine Dickenkontrolle zur Vollständigkeitsprüfung mit der Möglichkeit zur gezielten Ausschleusung von der weiteren Verarbeitung.

## Patentansprüche

1. **Vorrichtung** zum Zuführen von Buchblocks (2) in den Einfuhrkanal (11) einer Weiterverarbeitungseinrichtung,
wobei der Einfuhrkanal (11) einen Kanalboden (12), seitliche Kanalführungen (13) und wenigstens einen die auf ihrem Rücken (2 a) oder Vorderschnitt stehenden Buchblocks (2) vor sich her schiebenden Mitnehmer (14) aufweist,
mit einem intermittierend rotierenden Anlegestern (31) mit mehreren, sternförmig an einer in Scheiben (33) unterteilten Walze angeordneten, jeweils rechtwinklig zueinander stehende erste und zweite Anlegeflächen (34.1, 34.2) aufweisenden Blockaufnahmen (34),
wobei die Buchblocks (2) dem Anlegestern (31) im Wesentlichen tangential zur Walze und quer zur Drehachse (32) flachliegend zugeführt und nach dem Aufstellen parallel zur Drehachse (32) abgefördert werden,
**dadurch gekennzeichnet,**
**dass** der Anlegestern (31) mehrere, jeweils den Blockaufnahmen (34) zugeordnete, parallel zu den zweiten Anlegeflächen (34.2) angeordnete sowie zu diesen relativ bewegbare Klemmbacken (36) aufweist.

2. Vorrichtung nach Anspruch 1, **dadurch gekennzeichnet, dass** die Klemmbacken (36) federbelastet gegen die zweiten Anlegeflächen (34.2) drücken.

3. Vorrichtung nach Anspruch 1 oder 2, **dadurch gekennzeichnet, dass** die Schließ- und Öffnebewegung der Klemmbacken (36) von einer Steuerkurve (41) gesteuert ist.

4. Vorrichtung nach Anspruch 3, **dadurch gekennzeichnet, dass** die Steuerkurve (41) von einem Antriebsmittel, z.B. einem Pneumatikzylinder (42), um die Drehachse (32) des Anlegesterns (31) taktweise vor und zurück gedreht wird, sodass zumindest die Schließbewegung der Klemmbacken (36) im Stillstand des Anlegesterns (31) erfolgt.

5. Vorrichtung nach Anspruch 3 oder 4, **dadurch gekennzeichnet, dass** die Klemmbacken (36) während der Rotationsbewegung des Anlegesterns (31), unmittelbar bevor die Buchblocks (2) ihre Aufrichtposition erreichen, geöffnet werden.

6. Vorrichtung nach einem der Ansprüche 1 bis 5, **dadurch gekennzeichnet, dass** den Klemmbacken (36) eine Blockdickenmesseinrichtung (45) zugeordnet ist.

7. Vorrichtung nach einem der Ansprüche 1 bis 6, **dadurch gekennzeichnet, dass** dem Anlegestern (31) wenigstens ein separat vom wenigstens einen Mitnehmer (14) des Einfuhrkanals (11) angetriebener Ausschieber (51) zugeordnet ist.

8. Vorrichtung nach Anspruch 7, **dadurch gekennzeichnet, dass** der wenigstens eine Ausschieber (51) zum wahlweisen Abschieben der Buchblocks (2) vom Anlegestern (31) in entgegengesetzte Förderrichtungen ausgebildet ist.

9. Vorrichtung nach Anspruch 7 oder 8, **dadurch gekennzeichnet, dass** der wenigstens eine Ausschieber (51) zur Übernahme und zur Weiterleitung in den Einfuhrkanal (11) von in Förderrichtung des Einfuhrkanals (11) zugeführten Buchblocks (2) durch den Anlegestern (31) ausgebildet ist.

10. Vorrichtung nach Anspruch 9, **gekennzeichnet durch** eine im Bereich des Anlegesterns (31) im Einfuhrkanal angeordnete Trennwand (73) zur Zusammenführung von in Förderrichtung des Einfuhrkanals (11) und über den Anlegestern (31) zugeführten Buchblocks (3.1, 3.2).

11. Vorrichtung nach einem der Ansprüche 1 bis 10, **dadurch gekennzeichnet, dass** an dem Einfuhrkanal (11) wenigstens zwei Anlegesterne (31, 72) angeordnet sind.
